## Europäisches Patentamt

## European Patent Office

## Office européen des brevets

(19)

(11) Veröffentlichungsnummer: **0 004 643**
**B1**

(12)

# EUROPÄISCHE PATENTSCHRIFT

(45) Veröffentlichungstag der Patentschrift:
**13.05.81**

(51) Int. Cl.³: **C 09 C 1/22,** C 09 C 1/40,
C 09 D 5/08

(21) Anmeldenummer: **79100945.9**

(22) Anmeldetag: **29.03.79**

(54) **Aktive Korrosionsschutzpigmente auf Calciumoxid-, Aluminiumoxid- und Eisenoxidbasis, Verfahren zu ihrer Herstellung und ihre Verwendung.**

(30) Priorität: **08.04.78 DE 2815306**

(43) Veröffentlichungstag der Anmeldung:
**17.10.79 Patentblatt 79/21**

(45) Bekanntmachung des Hinweises auf die Patenterteilung:
**13.05.81 Patentblatt 81/19**

(84) Benannte Vertragsstaaten:
**DE FR GB IT**

(56) Entgegenhaltungen:
DE-B-1 222 840
FR-A-2 353 620
US-A-2 243 033
US-A-3 330 678
US-A-3 904 421

SPRECHSAAL FÜR KERAMIK, GLAS, EMAIL,
SILIKATE, Nr. 18, 1967
(100. Jahrg.)
Coburg, W. Deutschland
J. FRITSCHE: «Brennfarben im Dreistoffdiagramm
Kalk–Tonerde–Eisenoxid», Seiten 685–698

(73) Patentinhaber: **BAYER AG, Zentralbereich Patente,
Marken und Lizenzen, D-5090 Leverkusen 1, Bayerwerk
(DE)**

(72) Erfinder: **Hund, Franz, Dr., Scheiblerstrasse 89,
D-4150 Krefeld (DE)**
Erfinder: **Kresse, Peter, Dr., Deswatinesstrasse 67,
D-4150 Krefeld (DE)**

(56) Entgegenhaltungen:
CHEMICAL ABSTRACTS, vol. 81,
Nr. 22, 1974, Zusammenfassung
Nr. 137676s,
Columbus, Ohio, USA
SHINODA, W. et al. «Pigments
for corrosion-preventing coating materials».

CHEMICAL ABSTRACTS, vol. 84,
Nr. 12, 1976,
Zusammenfassung Nr. 75838x,
Columbus, Ohio, USA
SHINODA W. et al. «Anticorrosive pigment».

CHEMICAL ABSTRACTS, vol. 84, Nr. 18
1976, Zusammenfassung Nr. 123527u,
Columbus, Ohio, USA
MIYAGAWA R. et al. «Anticorrosive pigments».

## Aktive Korrosionsschutzpigmente auf Calciumoxid-, Aluminiumoxid- und Eisenoxidbasis, Verfahren zu ihrer Herstellung und ihre Verwendung

Aktive Korrosionsschutzpigmente, denen grosse praktische Bedeutung zukommt, sind Bleimennige, Zinkkaliumchromat und Zinkstaub. Im Vergleich zu den in grossen Mengen verwendeten, für den Korrosionsschutz im wesentlichen inaktiven Eisenoxidpigmenten haben die erwähnten aktiven Korrosionsschutzpigmente entweder ein wesentlich höheres spezifisches Gewicht oder sind erheblich teurer. Es hat nicht an Bemühungen gefehlt, auf der Basis der wohlfeilen und relativ spezifisch leichten Aluminium- und Eisenoxidrohstoffe aktive Korrosionsschutzpigmente herzustellen. So wurde versucht, durch Zusammenglühen von Zink- und Erdalkalioxiden, -hydroxiden und -carbonaten mit verschiedenartigen Eisenverbindungen (Oxid, Oxidhydroxid, Carbonat, Sulfat usw.) bei Temperaturen von 650 bis 1150°C neue Korrosionsschutzpigmente auf Eisenoxidbasis herzustellen. Bei der Abprüfung dieser Pigmente auf ihre Korrosionsschutzwirkung zeigte sich aber, dass sie im Vergleich zu handelsüblichen Eisenoxidpigmenten zwar eine geringe Verbesserung bringen, dass sie aber nicht an die eingangs erwähnten aktiven Korrosionsschutzpigmente heranreichen.

Aufgabe der vorliegenden Erfindung ist die Entwicklung aktiver Korrosionsschutzpigmente auf Aluminium- und Eisenoxidbasis, die hinsichtlich ihrer Korrosionsschutzwirkung den bekannten Korrosionsschutzpigmenten ebenbürtig sind und die Nachteile der bekannten Korrosionsschutzpigmente nicht aufweisen.

Gegenstand der vorliegenden Erfindung sind Korrosionsschutzpigmente bestehend aus 30,0 bis 2,0 Mo-% CaO und 70,0 bis 98,0 Mol-% $Me_{23}$, wobei $Me_2O_3$ für (1-x) $Al_2O_3$ und x $Fe_2O_3$ steht und x Werte von 0,01 bis 0,95 annehmen kann, wobei bis zu 25 Mol-% des $Fe_2O_3$ durch die entsprechende Menge $Mn_2O_3$ ersetzt sein können, mit einer spezifischen Oberfläche nach BET zwischen 0,1 und 200, bevorzugt zwischen 1,0 und 150 m²/g und die einen prozentualen Gewichtsverlust pro Gramm Pigment nach dem Thompson-Korrosionstest von weniger als 0,05%, vorzugsweise weniger als 0,03% pro Gramm Pigment aufweisen.

Gegenstand der vorliegenden Erfindung ist ferner ein Verfahren zur Herstellung von Korrosionsschutzpigmenten, bestehend aus 30,0 bis 2,0 Mol-% CaO und 70,0 bis 98,0 Mol-% $Me_2O3$, wobei $Me_2O_3$ für (1-x) $Al_2O_3$ und x $Fe_2O_3$ steht und x Werte von 0,01 bis 0,95 annehmen kann, wobei bis zu 25 Mol-% des $Fe_2O_3$ durch die entsprechende Menge $Mn_2O_3$ ersetzt sein können, durch Glühen der entsprechenden Metalloxide oder beim Glühen Metalloxide ergebenden Ausgangsstoffe, dadurch gekennzeichnet, dass die Glühung bei Temperaturen von 200 bis 900°C, vorzugsweise 300 bis 800°C, besonders bevorzugt von 400 bis 600°C, in Gegenwart sauerstoffhaltiger und/oder inerter Gase durchgeführt wird.

Die neuen aktiven Korrosionsschutzpigmente auf Basis von Calciumoxid-, Aluminiumoxid und Eisenoxid werden so hergestellt, dass innige Mischungen von 30,0 bis 2,0 Mol-% CaO oder dieses beim Glühen liefernden Verbindungen und 70,0 bis 98,0 Mol-% $Me_2O_3$, wobei $Me_2O_3$ für (1-x) $Al_2O_3$ und x $Fe_2O_3$ steht und x Werte von 0 bis 1, vorzugsweise 0,01 bis 0,95 annehmen kann, wobei bis zu 25 Mol-% des $Fe_2O_3$ durch die entsprechende Menge $Mn_2O_3$ ersetzt sein können, bereitet, anschliessend in einem bestimmten Temperaturbereich geglüht, das Glühprodukt intensiv gemahlen, gegebenenfalls noch einmal geglüht, abgekühlt und gemahlen werden.

Die Glühtemperatur ist von entscheidender Bedeutung für die Eigenschaften der entstehenden Korrosionsschutzpigmente. Bei an Aluminiumoxid armen Pigmenten liegt die Glühtemperatur bei 200 bis 700°C, vorzugsweise 300 bis 600°C, besonders bevorzugt zwischen 400 und 600°C. Für an Aluminiumoxid reichere Pigmente werden Glühtemperaturen zwischen 200 und 1100°C, vorzugsweise zwischen 250 und 950°C, besonders bevorzugt zwischen 300 und 850°C gewählt. Die Glühdauer liegt in der Regel zwischen 0,1 und 20, vorzugsweise 0,5 bis 10 Stunden. Die erfindungsgemässen Korrosionsschutzpigmente zeigen spezifische Oberflächen nach BET (G. Brunnauer, P. H. Emmet und H. Teller, J. Amer. Chem. Soc. 60, 309 [1938]) zwischen 0,1 und 200, vorzugsweise zwischen 1,0 und 150 m²/g.

Die erfindungsgemässen Korrosionsschutzpigmente zeigen nach dem Thompson-Korrosionstest (H. A. Gardener, Physical and Chemical Examinations of Paints, Varnishes, Lacquers and Colors, 11. Auflage Bethesda 1950, S. 339) Prozentverluste pro Gramm Pigment von weniger als 0,05% pro Gramm Korrosionsschutzpigment, vorzugsweise weniger als 0,03% pro Gramm Korrosionsschutzpigment. Im Vergleich zeigt ein Korrosionsschutzpigmet auf Basis $Pb_3O_4$ nach dem Thompson-Korrosionstest einen Prozentverlust pro Gramm $Pb_3O_4$ in der Grössenordnung von 0,06%, ein aktives Zinkoxid einen Prozentverlust pro Gramm Zinkoxid in Höhe von 0,08% (Vgl. Tab. 3).

Als Ausgangsverbindungen bei der Herstellung der erfindungsgemässen Korrosionsschutzpigmente können für CaO das Oxid, bzw. dieses beim Glühen liefernde Verbindungen wie Hydroxide, Hydroxysalze, Carbonate, basische Carbonate, Nitrate, Chloride, Formiate, Acetate, Oxalate und andere organische Verbindungen des Calciums dienen. Für $Me_2O_3$ können beliebige Aluminium- und/oder Eisen-, gegebenenfalls auch Manganoxidverbindungen, oder beim Glühen Aluminium-, und/oder Eisen-, gegebenenfalls Manganoxid liefernde Verbindungen wie Oxidhydroxide, Hydroxide, Hydroxysalze, Carbonate, basische Carbonate, Nitrate, Chloride, Sulfate, Formiate, Acetate, Oxalate bzw. organische Carboxylate, eingesetzt werden. Werden Eisen- bzw.

Manganverbindungen eingesetzt, die das Element nicht oder nicht ausschliesslich im dreiwertigen Zustand enthalten, so ist die Glühung des erfindungsgemässen Korrosionsschutzpigmentes in sauerstoffhaltiger Atmosphäre, vorzugsweise in Luft oder $O_2$-angereicherter Luft, durchzuführen. Als besonders vorteilhaft erweisen sich bei den Eisenverbindungen Eisen(II)-hydroxid, Eisen(II)-carbonat oder basisches Carbonat, die man durch Alkalihydroxid- oder -carbonatfällung aus Eisen(II)-salzen, vorzugsweise Eisen(II)-sulfatlösung, gewinnen kann.

Weitere technisch interessante Rohstoffe für Eisen(III)-oxid sind die bei der Reduktion aromatischen Nitroverbindungen mit Eisen in saurer Lösung anfallenden $Fe_3O_4$-, $\alpha$-FeOOH-und $\alpha$-$Fe_2O_3$-Pigmentschlämme oder die nach dem Luftoxidationsverfahren mit Eisenschrott oder $Fe(OH)_2$-Fällung in Gegenwart von Keimen darstellbaren Eisenoxidgelb- ($\alpha$-FeOOH), Eisenoxidorange-($\gamma$-FeOOH) und Eisenoxidrotpigmente ($\alpha$-$Fe_2O_3$). Auch die aus kristallwasserhaltigem oder kristallwasserfreiem Eisen(II)-sulfat durch Röstoxidations- oder Röstreduktionsverfahren anfallenden roten, braunen und schwarzen Eisenoxide sind für die Herstellung der neuen aktiven Korrosionsschutzpigmente geeignete Ausgangsverbindungen.

Geeignete Aluminiumverbindungen sind neben natürlich vorkommenden Aluminiummineralen Böhmit und Diaspor; aus Aufschlusslösungen ausgerührte reine Aluminiumhydroxide auch Mischungen von Eisen- mit Aluminiumverbindungen, wie die beim Aufschluss von Aluminiumerzen anfallende «Rotschlämme» der Aluminiumindustrie auch Siliciumdioxid oder Silikate enthaltende Erze des Aluminiumoxids (z.B. Kaoline in weitestem Sinne).

Ausgangsverbindungen für Mangan sind natürlich vorkommende Mangan-Minerale oder synthetisch hergestellter und/oder als Abfallprodukt bei organischen Synthesen anfallender Braunstein, die allein oder in Kombination mit den erwähnten Eisen- und Aluminiumverbindungen zur Herstellung der erfindungsgemässen Korrosionsschutzpigmente verwendet werden können.

Eine weitere Möglichkeit zur Herstellung der oxidischen Ausgangsstoffe für die neuen Korrosionsschutzpigmente besteht in einer vollständigen oder teilweisen gemeinsamen Ausfällung von Calcium-, Eisen(II) oder Mn(II)-salzlösung und Me(III)-salzlösung (Al, Fe, Mn) mit Alkali-, Erdalkalihydroxid- und/oder -carbonatlösung.

In den nachfolgenden Tabellen werden die Eigenschaften verschiedener erfindungsgemässer Korrosionsschutzpigmente in Abhängigkeit von Zusammensetzung und Glühtemperatur zusammengestellt. Die Korrosionsschutzpigmente werden so gewonnen, dass innige Mischungen von 30,0 bis 2,0 Mol-% CaO oder diese beim Glühen liefernden Verbindungen mit 70,0 bis 98,0 Mol-% $Me_2O_3$, wobei $Me_2O_3$ für (1-x) $Al_2O_3$ und x $Fe_2O_3$ steht und x Werte von 0 bis 1, vorzugsweise 0,01 bis 0,95 annehmen kann, wobei bis zu 25

Mol-% des $Fe_2O_3$ durch die entsprechende Menge $Mn_2O_3$ ersetzt sein können, oder diese beim Glühen liefernden Verbindungen hergestellt, eine Stunde auf eine 100°C unterhalb der in den Tabellen angegebenen Endtemperaturen geglüht, abgekühlt und gemahlen werden. Die absoluten Mengen der Glühprodukte bewegen sich im Bereich von 50 bis 100 g. Die Ergebnisse der Pigmentprüfung finden sich in den Tabellen 1–2.

Der Thompson-Korrosionstest an den Pigmenten wurde wie folgt durchgeführt:

In eine mit doppelt durchbohrtem Stopfen versehene 200 ml Pulverflasche wurden je nach Schüttgewicht 15 oder 30 g Pigment, 60 ml bidestilliertes Wasser und vier gereinigte und mit Äther entfettete, gewogene und mit Perlonfäden festgebundene, glänzend polierte Rasierklingen eingebracht. Durch Glasrohre wurden die einzelnen hintereinander gereihten Pulverflaschen mit den verschiedenen Pigmentsuspensionen unter Zwischenschaltung von leeren Pulverflaschen verbunden. Durch Einschalten des Laborvakuums wurde über ein Luftrotameter und einen als Blasenzähler dienenden Erlenmeyerkolben im Verlauf von 10 Tagen ein gleichbleibender Luftstrom von 60 l/h durchgeleitet. Durch diesen Luftstrom wird die Pigmentsuspension ständig durchgewirbelt und kommt das Pigment ständig in Kontakt mit dem Wasser. Nach Ablauf von 10 Tagen wurden die Rasierklingen aus jeder Flasche herausgenommen, sorgfältig gereinigt, getrocknet und der Gewichtsverlust durch Rückwaage bestimmt. Der prozentuale Gewichtsverlust wird durch die eingesetzte Pigmentmenge dividiert. Der Prozentverlust/g Pigment stellt ein Mass für die Stärke der Korrosion dar. Je niederiger dieser Wert ist, um so grösser ist die Korrosion verhindernde Wirkung des Pigments. Da die so ermittelten Werte sehr klein sind, wurden sie zur Vereinfachung einer vergleichenden Betrachtung mit einem Faktor von $10^3$ multipliziert. Diese Werte sind in den letzten Kolonnen der Tabellen 1 bis 3 angegeben.

Zum Vergleich mit den erfindungsgemässen Korrosionsschutzpigmenten ist in der Tabelle 3 das Korrosionsverhalten von einigen anorganischen Pigmenten beim Thompson-Korrosionstest dargestellt.

Wie man sieht, liegen die Zahlenwerte der aufgeführten bisher verwendeten anorganischen Korrosionsschutzpigmente alle über 0,08%-Verlust pro Gramm Pigment. Die in dieser Anmeldung aufgeführten Pigmente haben alle Zahlenwerte, die unter 0,05%, bevorzugt unter 0,03%-Verlust pro Gramm Pigment liegen.

Da in vielen Fällen die Korrosionsschutzwerte nach dem Thompson-Test notwendige aber manchmal nicht ausreichende Bedingungen für den praktischen Einsatz von Korrosionsschutzpigmente darstellen, wurde ein Pigment aus dieser Reihe mit 14,3 Mol-% CaO und 85,7 Mol-% $Al_2O_3$ und einer Glühtemperatur von 500 bzw. 600°C in Anstrichen auf Stahlblechen dem Salzsprühtest nach DIN 53.167 bzw. ASTM-B 287-61 unterworfen.

Die Prüfung der neuen aktiven Korrosionsschutzpigmente erfolgte in einem langöligen Alkydharz auf Basis harzsäurearmer Tallölfettsäure in Vergleich zu handelsüblichem Zinkphosphat und Zinkchromat. Für die Abprüfung wurde eine Pigmentvolumenkonzentration (PVK) von 34% gewählt.

Grundrezeptur in Gew.-Teilen:
167,-- langöliges Alkydharz, 60%ig in Testbenzin
  2,50 leichtflüchtiges Oxim als Hautverhinderungsmittel Ascinin® R 55 (Bayer A.G.)
  4,-- Co-, Pb-, Mn-Octoat, 1:2 in Xylol
  1,25 Ca-octoat, 4%ig
 25,25 Verdünnung Testbenzin/Terpentinöl 8:2
Menge Pigment nach gewählter Pigment-Volumen-Konzentration (PVK).

Die Anreibung erfolgt durch 5stündiges Mahlen in Labor-Kugelschwingmühlen.

Zur Prüfung des Korrosionsschutzverhaltens der Pigmente werden die Grundierungen so auf gebonderte Stahlbleche (Bonder 125 der Metallgesellschaft AG, Frankfurt/Main) gespritzt, dass Trockenschichtdicken von ca. 45µ entstehen. Nach einer Mindesttrockenzeit von 7 Tagen erfolgt die Korrosionsschutzprüfung mit dem Salzsprühtest nach DIN 53 167 bzw. ASTM B 287-61 (Dauerbesprühung mit 5%iger Kochsalzlösung bei 35 ± 2 °C).

Nach 3, 8, 11, 18, 24, 31, 38, 45 und 52 Tagen werden die Prüfbleche abgemustert. Die Beurteilung erfolgt nach einem Benotungssystem, welches von 0 (= keine Beschädigung) bis 12 (= vollständige Zerstörung des Anstrichfilmes) reicht; diese Bewertung wurde von P. Kresse im XIII-Fatipec-Kongressbuch (Cannes 1976), S. 346–353 in «Der Mechanismus der Einwirkung von Salzlösungen auf anstrichbedecktes Eisen» beschrieben. Die Summe der Einzelnoten zu den oben genannten Abmusterungstagen bis zum 52. Tag für die einzelnen Pigmentierungssysteme wird als «Korrosionsgrad» bezeichnet. Je grösser diese Summe, d.h. je höher der Korrosionsgrad in einem gewählten Pigment-Bindemittelsystem, um so geringer ist die Korrosion verhindernde Wirkung des eingesetzten Korrosionsschutzpigmentes.

Im Vergleich zum Zinkphosphat-Korrosionsschutzpigment des Handels mit seinen relativ schlechten Korrosionsschutzwerten sind die bei 500 und 600 °C geglühten Pigmente Nr. 2.2; 2.3 mit 14,3% CaO und 85,7 Mol-% $Al_2O_3$ wesentlich besser (Tab. 4). Innerhalb der Fehler des Salzsprühtestes sind diese ungiftigen Korrosionsschutzpigmente dieser Anmeldung in ihrer vor Korrosion schützenden Wirkung fast gleich gut wie die Chrom(VI)-ionen enthaltenden Zinkchromatpigmente des Handels.

Tab. 1: Korrosionsverhalten in Abhängigkeit von Zusammensetzung und Erhitzungstemperatur (30 g Pigment/60 ml $H_2O$; Thompson-Korrosionstest)

| Vers.-Nr. | Zusammensetzung in Mol-% | | | Glühtemperatur 1 h – °C | $10^3 \cdot$%-Verlust pro Gramm Pigment |
|---|---|---|---|---|---|
| | CaO | $Al_2O_3$ | $Fe_2O_3$ | | |
| 1.1. | 25,0 | 75,0 | – | 400 | 0,0 |
| 1.2. | 25,0 | 75,0 | – | 500 | 0,0 |
| 1.3. | 25,0 | 75,0 | – | 600 | 2,0 |
| 1.4. | 25,0 | 75,0 | – | 700 | 0,0 |
| 1.5. | 25,0 | 75,0 | – | 800 | 0,0 |
| 1.6. | 25,0 | 75,0 | – | 900 | 0,0 |
| 1.7. | 25,0 | – | 75,0 | 400 | 15,8 |
| 1.8. | 25,0 | – | 75,0 | 500 | 45,5 |
| 1.9. | 25,0 | – | 75,0 | 600 | 52,7 |
| 1.10. | 25,0 | – | 75,0 | 700 | 43,0 |
| 1.11. | 25,0 | 75,0 | – | – | – |
| 1.12. | 25,0 | 56,2 | 18,8 | 500 | 9,5 |
| 1.13. | 25,0 | 37,5 | 37,5 | 500 | 0,7 |
| 1.14. | 25,0 | 18,8 | 56,2 | 500 | 0,0 |
| 1.15. | 25,0 | 18,8 | 56,2 | 600 | 27,4 |
| 1.16. | 25,0 | 25,0 | 25,0+25,0% $Mn_2O_3$ | 500 | 11,4 |
| 1.17. | 25,0 | 25,0 | 25,0+25,0% $Mn_2O_3$ | 600 | 40,6 |

Tab. 2: Korrosionsverhalten in Abhängigkeit von Zusammensetzung und Erhitzungstemperatur (30 g Pigment/60 ml $H_2O$; Thompson-Korrosionstest)

| Vers.-Nr. | Zusammensetzung in Mol-% | | | Glühtemperatur 1 h – °C | $10^3 \cdot$ %-Verlust pro Gramm Pigment |
|---|---|---|---|---|---|
| | CaO | $Al_2O_3$ | $Fe_2O_3$ | | |
| 2.1. | 14,3 | 85,7 | – | 400 | 0,0 |
| 2.2. | 14,3 | 85,7 | – | 500*) | 0,0 |
| 2.3. | 14,3 | 85,7 | – | 600*) | 0,0 |
| 2.4. | 14,3 | 64,3 | 21,4 | 500 | 6,1 |
| 2.5. | 14,3 | 64,3 | 21,4 | 600 | 9,1 |
| 2.6. | 14,3 | 42,9 | 42,8 | 600 | 11,9 |
| 2.7. | 14,3 | 21,4 | 64,3 | 500 | 10,2 |
| 2.8. | 14,3 | 21,4 | 64,3 | 600 | 21,2 |
| 2.9. | 14,3 | 8,6 | 77,1 | 600 | 21,8 |
| 2.10. | 14,3 | – | 85,7 | 600 | 19,0 |
| 2.11. | 5,0 | 95,0 | – | 500 | 0,0 |
| 2.12. | 5,0 | 71,3 | 23,7 | 400 | 30,6 |
| 2.13. | 5,0 | 47,5 | 47,5 | 600 | 33,3 |
| 2.14. | 2,5 | 97,5 | – | 400 | 13,7 |
| 2.15. | 1,0 | 99,0 | – | 600 | 90,5 |
| 2.16. | – | 100,0 | – | 600 | 232,4 |

*) Verwendung für Salzsprühtest

Tab. 3: Korrosionsverhalten von einigen anorganischen Pigmenten beim Thompson-Korrosionstest

| Vers.-Nr. | Art des Pigments Typ | g Pigment/ 60 ml $H_2O$ | Verlust (%) | $10^3 \cdot$ %-Verlust/ g Pigment |
|---|---|---|---|---|
| 3.1. | $\alpha$-FeOOH | 15 | 10,10 | 673,0 |
| 3.2. | $\alpha$-$Fe_2O_3$ | 30 | 5,05 | 168,0 |
| 3.3. | $Fe_3O_4$ | 30 | 10,36 | 345,0 |
| 3.4. | $\gamma$-CrOOH | 15 | 1,69 | 113,0 |
| 3.5. | $Pb_3O_4$ | 30 | 1,73 | 57,7 |
| 3.6. | ZnO | 15 | 1,20 | 80,4 |

Tab. 4: Ergebnis der Korrosionsschutzprüfung (Salzsprühtest DIN 53.167, bzw. ASTM B 287-61; Pigmentvolumenkonzentration = 34%)

| Pigmentart | Korrosionsgrad bis 1248 Stunden Prüfzeit |
|---|---|
| Pigment Nr. 2.2. – 500°C 14.3 Mol-% CaO; 85.7 Mol-% $Al_2O_3$ | 16,0 |
| Pigment Nr. 2.3. – 600°C 14.3 Mol-% CaO; 85.7 Mol-% $Al_2O_3$ | 21,5 |
| Zinkphosphat | 48,5 |
| Zinkchromat | 11,5 |

## Patentansprüche

1. Korrosionsschutzpigmente, bestehend aus 30,0 bis 2,0 Mol-% CaO und 70,0 bis 98,0 Mol-% $Me_2O_3$, wobei $Me_2O_3$ für (1-x) $Al_2O_3$ und x $Fe_2O_3$ steht und x Werte von 0,01 bis 0,95 annehmen kann, wobei bis zu 25 Mol-% des $Fe_2O_3$ durch die entsprechende Menge $Mn_2O_3$ ersetzt sein können, mit einer spezifischen Oberfläche nach BET zwischen 0,1 und 200, bevorzugt zwischen 1,0 und 150 m²/g, die einen prozentualen Gewichtsverlust pro Gramm Pigment nach dem Thompson-Korrosionstest von weniger als 0,05%, vorzugsweise weniger als 0,03% pro Gramm Pigment aufweisen.

2. Verfahren zur Herstellung von Korrosionsschutzpigmenten, bestehend aus 30,0 bis 2,0 Mol-% CaO und 70,0 bis 98,0 Mol-% $Me_2O_3$, wobei $Me_2O_3$ für (1-x) $Al_2O_3$ und x $Fe_2O_3$ steht und x Werte von 0,01 bis 0,95 annehmen kann, wobei bis zu 25 Mol-% des $Fe_2O_3$ durch die entsprechende Menge $Mn_2O_3$ ersetzt sein können, durch Glühen der entsprechenden Metalloxide oder beim Glühen Metalloxide ergebender Ausgangsstoffe, dadurch gekennzeichnet, dass die Glühung bei Temperaturen von 200 bis 1100°C, vorzugsweise 300 bis 900°C, besonders bevorzugt von 400 bis 600°C in Gegenwart sauerstoffhaltiger und/oder inerter Gase durchgeführt wird.

3. Verfahren gemäss Anspruch 2, dadurch gekennzeichnet, dass als Ausgangsstoff für $Mn_2O_3$ natürlich vorkommende Mangan-Minerale oder synthetisch hergestellter und/oder als Abfallprodukt bei organischen Synthesen anfallender Braunstein in Kombination mit den erwähnten Eisen- und/oder Aluminiumverbindungen verwendet werden.

4. Verfahren gemäss einem der Ansprüche 2 und 3, dadurch gekennzeichnet, dass als Ausgangsstoffe für $Al_2O_3$, $Fe_2O_3$ oder $Mn_2O_3$ Mischhydroxide oder -oxidhydroxide von Al(III), Fe(III) und Mn(II) oder Mn(III) eingesetzt werden.

5. Verwendung von Korrosionsschutzpigmenten gemäss Anspruch 1 zur Herstellung von Korrosionsschutzanstrichen oder Korrosionsschutzlacken.

**Patent Claims**

1. Anti-corrosion pigments consisting of 30.0 to 2.0 mole % of CaO and 70.0 to 98.0 mole % of $Me_2O_3$, wherein $Me_2O_3$ represents (1-x) $Al_2O_3$ and x $Fe_2O_3$ and x may have values from 0.01 to 0.95 and up to 25 mole % of the $Fe_2O_3$ may be replaced by the corresponding quantity of $Mn_2O_3$, and having a specific surface area according to BET of from 0.1 to 200 and preferably from 1.0 to 150 m²/g, and a percentage weight loss per gram of pigment, as determined by the Thompson corrosion test, of less than 0.05%, preferably less than 0.03% per gram of pigment.

2. A process for the production of anti-corrosion pigments consisting of 27.0 to 2.0 mole % of CaO and 73.0 to 98.0 mole % of $Me_2O_3$, wherein $Me_2O_3$ represents (1-x) $Al_2O_3$ and x $Fe_2O_3$ and x may have values from 0.01 to 0.95, wherein up to 25 mole % of the $Fe_2O_3$ may be replaced by the corresponding quantity of $Mn_2O_3$, by calcining the corresponding metal oxides or starting materials which form metal oxides on calcination, characterised in that the calcination is conducted at temperatures from 200 to 1100°C, preferably from 300 to 900°C, and with particular preference from 400 to 600°C in the presence of oxygen-containing and/or inert gases.

3. A process according to claim 2, characterised in that the starting materials used for the $Mn_2O_3$ are naturally occurring manganese minerals or synthetically produced manganese dioxide and/or manganese dioxide obtained as a waste product in organic syntheses in combination with the abovementioned iron and/or aluminium compounds.

4. A process according to one of claims 2 and 3, characterised in that the starting materials used for $Al_2O_3$, $Fe_2O_3$ or $Mn_2O_3$ are mixed hydroxides or oxide hydroxides of Al(III), Fe(III) and Mn(II) or Mn(III).

5. The use of anti-corrosion pigments according to claim 1 for producing anti-corrosion paints or anti-corrosion lacquers.

**Revendications**

1. Pigments anticorrosion consistant en 30,0 à 2,0 moles % de CaO et 70,0 à 98,0 moles % de $Me_2O_3$, $Me_2O_3$ représentant (1-x) $Al_2O_3$ et x $Fe_2O_3$, x pouvant prendre des valeurs de 0,01 à 0,95, et jusqu'à 25 moles % du $Fe_2O_3$ pouvant être remplacés par la quantité correspondante de $Mn_2O_3$, présentant une surface spécifique selon BET de 0,1 à 200, de préférence de 1,0 à 150 m²/g, et qui, au test de corrosion Thompson, présentent une perte de poids % par gramme de pigment inférieure à 0,05% et de préférence inférieure à 0,03% par gramme.

2. Procédé de préparation de pigments anticorrosion consistant en 27,0 à 2,0 moles % de CaO et 73,0 à 98,0 moles % de $Me_2O_3$, $Me_2O_3$ représentant (1-x) $Al_2O_3$ et x $Fe_2O_3$, et x pouvant prendre des valeurs de 0,01 à 0,95, jusqu'à 25 moles % du $Fe_2O_3$ pouvant être remplacés par la quantité correspondante de $Mn_2O_3$, par calcination des oxydes métalliques correspondants ou par calcination de produits de départ donnant les oxydes métalliques, ce procédé se caractérisant en ce que la calcination est effectuée à des températures de 200 à 1100°C, de préférence de 300 à 900°C, mieux encore de 400 à 600°C, en présence de gaz contenant de l'oxygène et/ou de gaz inertes.

3. Procédé selon la revendication 2, caractérisé en ce que l'on utilise comme produits de départ pour $Mn_2O_3$ des minéraux manganeux d'origine naturele ou de la pyrolusite préparée par synthèse et/ou obtenue en sous-produit dans des synthèses organiques, en combinaison avec les composés cités du fer et/ou de l'aluminium.

4. Procédé selon l'une des revendications 2 et 3, caractérisé en ce que l'on utilise comme produits de départ pour $Al_2O_3$, $Fe_2O_3$ ou $Mn_2O_3$ des hydroxydes ou oxydes basiques méélangés de Al-III, Fe-III et Mn-II ou Mn-III.

5. Utilisation des pigments anticorrosion selon la revendication 1 pour l'application d'enduits anticorrosion ou la préparation de peintures anticorrosion.